# EUROPÄISCHE PATENTSCHRIFT

(11) **EP 2 611 012 B1**
(45) Veröffentlichungstag und Bekanntmachung des Hinweises auf die Patenterteilung: **15.08.2018**
(21) Anmeldenummer: 12007144.4
(22) Anmeldetag: 15.10.2012
(51) Int. Cl.: H02K 49/10, B01F 13/08

(54) **Magnetkupplung und Rührwerk mit derartiger Magnetkupplung**
Magnetic coupling and stirring assembly with such a magnetic coupling
Embrayage magnétique et agitateur doté d'un tel embrayage magnétique

(30) Priorität: 27.12.2011 DE 102011122554
(43) Veröffentlichungstag der Anmeldung: 03.07.2013
(73) Patentinhaber: EagleBurgmann Germany GmbH & Co. KG, 82515 Wolfratshausen (DE)
(72) Erfinder: Cornil, Carl, 4960 Malmédy (BE); Pfeil, Dieter, 82547 Eurasburg (DE); Rauh, Gisela, 82538 Eurasburg (DE); Ertl, Martin, 82541 Holzhausen (DE)
(74) Vertreter: Hoefer & Partner Patentanwälte mbB

(56) Entgegenhaltungen:
- DE-A1- 4 214 848
- DE-A1- 4 232 934
- DE-U1- 29 800 818

## Beschreibung

Die Erfindung betrifft eine Magnetkupplung sowie ein Rührwerk mit einer erfindungsgemäßen Magnetkupplung.

Magnetkupplungen sind aus dem Stand der Technik, insbesondere in Verbindung mit Pumpen, bekannt, um eine leckagefreie Drehmomentübertragung auszuführen. Üblicherweise wird hierbei ein Außenrotor der Magnetkupplung angetrieben und ein Innenrotor ist mit einem anzutreibenden Pumpenrad oder dgl. verbunden. Weiterhin sind aus dem Stand der Technik Rührwerke bekannt, welche einen Rührbehälter aufweisen, in den ein Mischvorgang mittels einer in den Rührbehälter ragenden Rührvorrichtung erfolgt. Insbesondere bei geschlossenen Rührbehältern ist eine Abdichtung einer die Rührvorrichtung antreibenden Antriebswelle notwendig, was beispielsweise mittels Gleitringdichtungen möglich ist. Häufig erfolgt ein Antrieb der Rührvorrichtung mittels sog. "Obenantriebe", wobei ein Antrieb, die Antriebswelle und die Rührvorrichtung in einer Linie oben am Rührbehälter angeordnet sind. Bei Verwendung derartiger Rührwerke in der chemischen und insbesondere der pharmazeutischen Industrie kann ferner die Notwendigkeit bestehen, dass die Rührwerke gereinigt und/oder sterilisiert werden müssen. Hierbei hat sich herausgestellt, dass insbesondere im Bereich der Abdichtungen Verschmutzungen oder Keimansammlungen vorkommen können, welche nur mit höchstem Aufwand zu reinigen sind. Häufig muss hierbei auch die Antriebseinheit demontiert werden, um die Sterilisation entsprechend den geforderten Auflagen durchführen zu können. Auch können bei schnell drehenden Magnetkupplungen oder bei Kontakt mit heißen Medien Wärmeprobleme an Magnetkupplungen auftreten. Ferner ist aus der DE 42 32 934 A1 eine Magnetkupplung eines Untenantriebs gemäß dem Oberbegriff des Anspruchs 1 bekannt. Weiterhin zeigt die DE 298 00 818 U1 ein Rührwerk mit einem Untenantrieb, welches auch während eines Entleervorganges Restmengen rühren kann, ohne dass das Rührwerk beschädigt wird.

Es ist daher Aufgabe der vorliegenden Erfindung eine Magnetkupplung sowie ein Rührwerk bereitzustellen, welche bei einfachem und kostengünstigen Aufbau und sehr kompakter Bauweise, insbesondere auch eine schnelle und einfache Reinigung und/oder Sterilisation ermöglichen.

Diese Aufgabe wird durch eine Magnetkupplung mit den Merkmalen des Anspruchs 1 bzw. ein Rührwerk mit den Merkmalen des Anspruchs 14 gelöst. Die Unteransprüche zeigen jeweils bevorzugte Weiterbildungen der Erfindung.

Die erfindungsgemäße Magnetkupplung mit den Merkmalen des Anspruchs 1 weist dabei den Vorteil auf, dass sie einen besonders kompakten und einfachen Aufbau für die Lagerung des Außenrotors aufweist und eine Reinigung und/oder Sterilisation möglich ist. Hierzu weist die Magnetkupplung einen Spalttopf mit einem Lagerbereich auf, an welchem der Außenrotor gelagert ist. Der Lagerbereich ist dabei an einem Bodenbereich des Spalttopfes angeordnet. Durch diese erfindungsgemäße Maßnahme weist der Spalttopf neben seiner Funktion der Abdichtung zwischen einem medienseitigen Raum oder der Atmosphäre auch noch eine Funktion der Lagerung des Außenrotors auf. Da der Lagerbereich am Bodenbereich des Spalttopfes angeordnet ist, kann die Lagerung des Außenrotors außerhalb des Drehmomentübertragungsbereichs der Magnetkupplung erfolgen. Weiter kann durch diese erfindungsgemäße Maßnahme insbesondere ein maximaler Außendurchmesser der Magnetkupplung reduziert werden. Darüber hinaus kann durch einen Fluidpfad, welcher einen Eintritt und einen Austritt aufweist, welche in Axialrichtung der Magnetkupplung voneinander beabstandet sind, eine exzellente Reinigung im Durchflussprinzip vorgenommen werden. Weiter umfasst der Fluidpfad wenigstens eine Düse, insbesondere einen Düsenkranz, wobei die Düse im Fluidpfad in Durchströmungsrichtung durch den Fluidpfad vor dem Spalttopf angeordnet ist. Durch die Durchströmung des Fluides durch die Düse wird eine Erhöhung der Fluidgeschwindigkeit erreicht, so dass eine bessere Reinigung/Sterilisation möglich ist. Weiterhin stellt die wenigstens eine Düse sicher, dass eine gleichmässige und schnelle Durchströmung des restlichen Fluidpfades erhalten wird. Ferner ist im Fluidpfad wenigstens eine Düse oder ein Düsenkranz angeordnet, welche in Durchströmungsrichtung vor dem Spalttopf liegen, so dass das beschleunigte Fluid insbesondere an Spalttopfwänden gleichmässig und schnell vorbeiströmen kann und eine verbesserte Reinigung/Sterilisation ermöglicht.

Für eine besonders kostengünstige Herstellbarkeit ist der Lagerbereich vorzugsweise einstückig mit dem Spalttopf gebildet. Alternativ kann der Lagerbereich auch an den Bodenbereich des Spalttopfes angeschweißt oder mittels mechanischen Verbindungselementen oder mittels Kleben befestigt sein. Weiter bevorzugt ist ein maximaler Durchmesser des Lagerbereichs kleiner als ein maximaler Durchmesser des Mantelbereichs des Spalttopfs.

Vorzugsweise ist der Austritt ringförmig, was eine gleichmäßige Durchspülung des Zwischenraums am Spalttopf ermöglicht.

Weiter bevorzugt ist der Spalttopf mit dem daran angeordneten Lagerbereich in Vertikalrichtung ausgerichtet, so dass ein Mantelbereich des Spalttopfs parallel zur Vertikalrichtung ist.

Besonders bevorzugt umfasst die Magnetkupplung ein erstes und ein zweites Lager, welche beide am Lagerbereich des Spalttopfes angeordnet sind. Die beiden Lager sind dabei in Axialrichtung der Magnetkupplung versetzt angeordnet, wobei wenigstens eines der Lager zur Aufnahme von Axialkräften ausgelegt ist, vorzugsweise das Lager, welches weiter entfernt vom Boden des Spalttopfes ist. Die beiden Lager sind vorzugsweise schmierstofffreie Lager, insbesondere trocken laufende Keramiklager. Die Keramiklager sind vorzugsweise aus Siliziumnitrid hergestellt und weisen weiter bevorzugt Lagerkäfige aus einem Kunststoff, insbesondere PEEK, auf.

Weiterhin ermöglicht die Anordnung eines Lagerbereichs am Boden des Spalttopfs, dass z.B. bei Verwendung der Magnetkupplung bei Rührwerken die Lagerung im Inneren eines Rührbehälters angeordnet werden kann.

Weiter bevorzugt sind die beiden Lager Teil einer Lageranordnung, insbesondere einer vormontierbaren Baugruppe. Die Lageranordnung umfasst ferner eine Hülse und einen die Hülse umgebenden Zylinder. Die vormontierte Baugruppe kann dann beispielsweise über den Lagerbereich am Boden des Spalttopfs geschoben werden und kraft- und/oder formschlüssig am Lagerbereich fixiert werden.

Weiter bevorzugt umfasst der Fluidpfad einen ersten Bereich zwischen einem Außenumfang des Mantelbereichs des Spalttopfs und dem Außenrotor sowie einen zweiten Bereich zwischen dem Lagerbereich und dem Außenrotor. Der Fluidpfad endet dabei an einem endseitigen Austrittsspalt zwischen dem Lagerbereich und dem Außenrohr, so dass Fluid zur Außenseite der Magnetkupplung austreten kann.

Hierdurch ist eine Reinigung und/oder Sterilisierung von Bereichen der Magnetkupplung möglich, welche in Kontakt mit einem abzudichtenden Medium kommen könnten. Auch ist dadurch vorzugsweise eine Reinigung der Lager zwischen Lagerbereich und dem Außenrotor möglich, wobei bevorzugt eine Durchströmung der Lager vorgesehen ist.

Weiter bevorzugt ist der Austrittsspalt zwischen dem Lagerbereich und dem Außenrotor als Vertikalringspalt ausgebildet. Dieser Vertikalringspalt ist vorzugsweise im Wesentlichen in Vertikalrichtung gerichtet. Dabei ist ein Querschnitt des Vertikalringspalts derart gewählt, dass ein Großteil des Reinigungsmediums bzw. Sterilisationsmediums durch den Vertikalringspalt hindurchgeführt wird.

Weiter bevorzugt umfasst der Spalttopf einen Flansch, wobei der Fluidpfad durch den Flansch verläuft. Vorzugsweise ist dabei zwischen dem Flansch und dem Außenrotor ein erster Spalt vorgesehen, über welchen eine Verbindung zwischen dem Fluidpfad und einer Außenseite möglich ist. Durch das Vorsehen des ersten Spalts kann insbesondere eine Stoßanordnung zwischen dem Flansch und dem Außenrohr durch ein Reinigungsfluid und/oder ein Sterilisationsfluid gereinigt bzw. sterilisiert werden. Der erste Spalt zwischen dem Flansch und dem Außenrotor ist dabei vorzugsweise im Wesentlichen in Horizontalrichtung gerichtet.

Weiter bevorzugt ist im Fluidpfad ein Ringkanal und ein Düsenkranz mit einer Vielzahl von Düsenöffnungen vorgesehen. Die Düsen münden bevorzugt in den ersten Bereich zwischen dem Außenumfang des Mantelbereichs und dem Außenrotor. Somit ist in Strömungsrichtung durch den Fluidpfad vor dem ersten Bereich der Ringkanal vorgesehen, so dass Fluid, welches in den Fluidpfad strömt, zuerst dem Ringkanal zugeführt wird und von dort über die Vielzahl von Düsen in den ersten Bereich überführt wird. Hierdurch kann insbesondere eine Strömungsgeschwindigkeit des Fluids durch die Düsen erhöht werden. Besonders bevorzugt münden die Vielzahl von Düsen dabei in einen ringförmigen Fangraum, welcher dem ersten Bereich in Durchströmungsrichtung vorgeschaltet ist.

Weiter bevorzugt ist am zweiten Bereich zwischen dem Lagerbereich und dem Außenrotor ein zweiter Spalt ausgebildet, um insbesondere am Lagerbereich und dort am ersten und/oder zweiten Lager eine effiziente Reinigung/Sterilisation zu ermöglichen. Besonders bevorzugt ist dabei ein Einlauf zum zweiten Spalt strömungsgünstig ausgebildet.

Weiter bevorzugt umfasst die Magnetkupplung ferner eine Kühlungsvorrichtung, welche ein Zuleitung und eine Ableitung umfasst, um ein Kühlfluid in einen Innenraum des Spalttopfs zuzuführen. Die Zuleitung mündet dabei vorzugsweise tangential zu dem inneren Mantelbereich des Spalttopfes. Weiter bevorzugt beginnt die Ableitung ebenfalls tangential am inneren Mantelbereich des Spalttopfes. Somit kann eine strömungsgünstige Durchspülung des Innenbereichs des Spalttopfes ausgeführt werden, so dass Wärme, welche z.B. im Betrieb der Magnetkupplung, insbesondere bei höheren Drehzahlen, auftreten kann, sicher abgeführt werden kann. Hierdurch wird eine Überhitzung der Magnetkupplung und gegebenenfalls Schädigung der Magnetkupplung, wirkungsvoll verhindert.

Zur Abdichtung des Innenraums des Spalttopfs gegenüber einer mit dem Innenrotor verbundenen Welle ist vorzugsweise eine Hilfsdichtung, besonders bevorzugt in Form einer Gleitringdichtung, vorgesehen. Kühlung und Schmierung der Hilfsdichtung wird dabei ebenfalls vorzugsweise durch das Kühlmedium bereitgestellt. Alternativ kann auch eine Labyrinthdichtung vewendet werden. Zur Zirkulation des Kühlmediums kann eine externe Umwälzeinheit vorgesehen sein oder die Kühlung kann auch mittels Naturumlauf, d.h., ohne zusätzlichen Antrieb aufgrund der verschiedenen Temperaturen im Kühlkreislauf und der Rotation des Innenrotors, vorgenommen werden.

Für eine besonders gute Durchströmung des Spalttopfes sind die Zuleitung und die Ableitung vorzugsweise am Umfang des Spalttopfes um 180° einander gegenüberliegend angeordnet. Weiter bevorzugt ist die Magnetkupplung derart ausgelegt, dass der Innenrotor der antreibende Rotor und der Außenrotor der angetriebene Rotor ist. Der Innenrotor kann beispielsweise mittels eines Elektromotors angetrieben werden.

Ferner betrifft die vorliegende Erfindung ein Rührwerk mit einem Rührbehälter und einer erfindungsgemäßen Magnetkupplung, wobei die Magnetkupplung in Vertikalrichtung angeordnet ist. Besonders bevorzugt ist die Magnetkupplung dabei im Inneren des Rührbehälters angeordnet, so dass in Verbindung mit einem Obenantrieb eine möglichst kurze Baulänge des Rührwerks in Vertikalrichtung erreichbar ist. Die kurze vertikale Bauhöhe ermöglicht insbesondere ein einfaches Transportieren des Rührwerkes, z.B. bei Umorganisationen im Betrieb.

Weiter bevorzugt wird die Magnetkupplung mittels eines am Spalttopf vorgesehenen Flansches am Rührbehälter fixiert.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Schnittansicht einer Magnetkupplung gemäß einem ersten Ausführungsbeispiel der Erfindung, und
- Fig. 2: eine schematische Schnittansicht einer Magnetkupplung gemäß einem zweiten Ausführungsbeispiel der Erfindung.

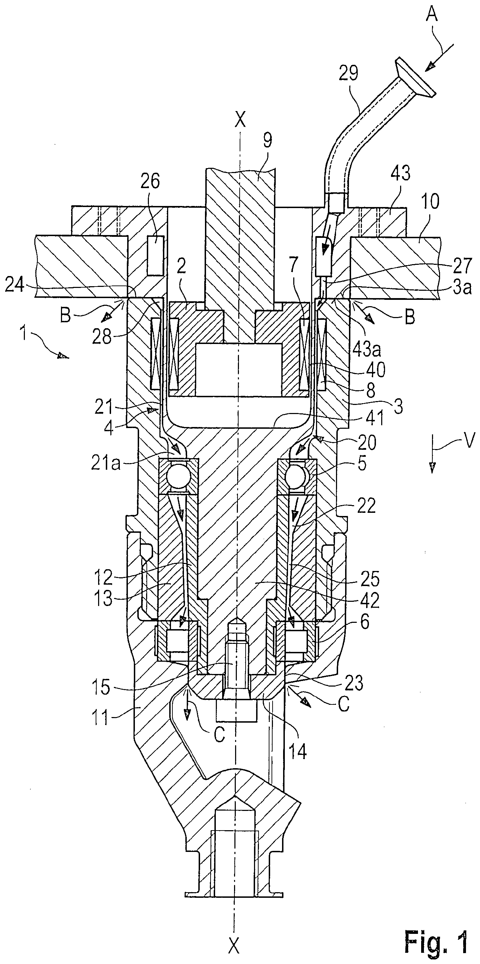

Nachfolgend wird unter Bezugnahme auf Fig. 1 eine Magnetkupplung 1 gemäß einem ersten bevorzugten Ausführungsbeispiel der Erfindung im Detail beschrieben.

Die Magnetkupplung 1 umfasst dabei einen Innenrotor 2, einen Außenrotor 3 und einen zwischen Innenrotor und Außenrotor angeordneten Spalttopf 4. Die Magnetkupplung 1 dieses Ausführungsbeispiels ist in Vertikalrichtung V angeordnet, d.h., eine Axialrichtung X-X (Mittelachse) der Magnetkupplung 1 ist parallel zur Vertikalrichtung V.

Der Spalttopf 4 umfasst einen dünnen Mantel 40, einen Boden 41, einen Lagerbereich 42 und ein Flansch 43. Wie aus Figur 1 ersichtlich ist, ist der Lagerbereich 42 im Wesentlichen zylindrisch ausgebildet und ist am Boden 41 angeordnet. Dabei ist der Lagerbereich 42 in Axialrichtung X-X der Magnetkupplung gerichtet. Am entgegengesetzten Ende des Mantels 40 ist der Flansch 43 zur Befestigung des Spalttopfes 4 an einem stationären Bauteil angeordnet. In diesem Ausführungsbeispiel ist das stationäre Bauteil ein Rührbehälter 10, an welchem die erfindungsgemäße Magnetkupplung 1 in Verbindung mit einem Obenantrieb angeordnet ist. Der nicht gezeigte Obenantrieb treibt dabei eine Antriebswelle 9 an, welche drehfest mit dem Innenrotor 2 verbunden ist. Ferner ist am Außenrotor 3 ein Anschluss 11 für eine Rührvorrichtung (Rührorgan) befestigt, so dass sich die Rührvorrichtung gemeinsam mit dem Außenrotor 3 dreht.

Weiterhin weist der Innenrotor 2 Permanentmagnete 7 auf, welche in gegenüberliegender Anordnung zu Permanentmagneten 8 am Außenrotor 3 angeordnet sind.

Der Außenrotor 3 ist dabei mittels einer Lageranordnung am Lagerbereich 42 des Spalttopfes gelagert. Die Lageranordnung umfasst ein erstes Lager 5 und ein zweites Lager 6, wobei wenigstens eines der Lager zur Aufnahme von Axialkräften ausgelegt ist. Die beiden Lager 5, 6 sind in diesem Ausführungsbeispiel als schmierstofffreie Keramiklager vorgesehen. Die Lageranordnung umfasst ferner eine Hülse 12, welche auf den Lagerbereich 42 aufschiebbar ist und mittels eines Halterings 14 und eines Schraubbolzens 15 im Lagerbereich 42 stirnseitig fixierbar ist. Weiterhin umfasst die Lageranordnung einen Zylinder 13, welcher radial außerhalb der Hülse 12 angeordnet ist. Dabei ist die Lageranordnung eine vormontierbare Baugruppe und kann in einem Schritt an den Lagerbereich 42 montiert werden.

Ferner umfasst die Magnetkupplung 1 einen Fluidpfad 20 zur Reinigung und/oder Sterilisierung von Bereichen der Magnetkupplung, welche in diesem Ausführungsbeispiel im Rührbehälter 10 angeordnet sind und mit dem im Rührbehälter 10 befindlichen Medium in Kontakt kommen können. Der Fluidpfad 20 verläuft im Wesentlichen in Axialrichtung X-X. Eine Zuführung eines Reinigungs- oder Sterilisationsfluids (nachfolgend der Einfachheit halber lediglich als Reinigungsfluid bezeichnet) erfolgt, wie aus Fig. 1 ersichtlich ist, in Richtung des Pfeils A in einem Anschluss 29 (Eintritt). Der Fluidpfad 20 verläuft dann durch den Flansch 43 in einen Ringkanal 26. Der Ringkanal 26 ist im Flansch 43 angeordnet und stellt eine ringförmige Verteilung des Reinigungsfluids sicher. In Strömungsrichtung durch den Fluidpfad ist im Ringkanal 26 ein Düsenkranz mit einer Vielzahl von Düsen 27 nachgeschaltet. Die Düsen 27 sind dabei vorzugsweise in gleichen Abständen in Umfangsrichtung am Ringkanal 26 angeordnet. Wie aus Fig. 1 ersichtlich ist, münden die Düsen 27 in einen ringförmigen Fangraum 28, in welchem das Reinigungsfluid mit hoher Geschwindigkeit einströmt. Ein erster ringförmiger Spalt 24 ist dabei auf Höhe des Fangraums 28 zwischen einem stirnseitigen Ende 3a des Außenrotors 3 und einem Absatz 43a des Flansches 43 gebildet. Hierbei kann Reinigungsfluid, wie in Fig. 1 durch den Pfeil B angedeutet, durch den ersten Spalt 24 radial nach außen austreten und so eine effektive Reinigung im ersten Spalt 24 zwischen dem Außenrotor 3 und dem Flansch 43 vornehmen.

Wie in Fig. 1 weiter durch die Pfeile im Fluidpfad 20 angedeutet, strömt das Reinigungsfluid vom Fangraum 28 weiter in einen spaltförmigen, ersten Bereich 21. Der spaltförmige erste Bereich 21 ist zwischen einem Außenumfang des Mantels 40 und einem Innenumfang des Außenrotors 3 gebildet. Das Reinigungsfluid strömt durch den spaltförmigen ersten Bereich 21 weiter in einen strömungsgünstig geformten, sich erweiternden Bereich 21a und von dort durch die Lageranordnung zwischen Lagerbereich 42 und Außenrotor 3. Genauer strömt das Reinigungsfluid durch das erste Lager 5 in einen zweiten Bereich 22 zwischen dem Lagerbereich und dem Außenrotor, wobei sich der zweite Bereich 22 zu einem zweiten Spalt 25 verjüngt. Nach dem Durchströmen des zweiten Spalts 25 durchströmt das Reinigungsfluid das zweite Lager 6 und tritt dann über einen Austrittsspalt 23 (Austritt) nach außen aus. Dies ist in Fig. 1 durch die Pfeile C angedeutet.

Wie aus Fig. 1 ersichtlich ist, sind die jeweiligen Strömungsbereiche des Fluidpfads 20 dabei totraumfrei gebildet, so dass eine effiziente Reinigung und/oder Sterilisation der Bereiche der Magnetkupplung möglich ist, welche mit dem Medium im Rührbehälter in Kontakt kommen können. Durch die abwechselnde, strömungsgünstige Anordnung von Spalten (erster Bereich 21, zweiter Spalt 25) und sich erweiternden Bereichen (Fangraum 28, Bereich 21a, zweiter Bereich 22) werden im Fluidpfad 20 abwechselnd unterschiedliche Strömungsgeschwindigkeiten während des Reinigungsvorgangs erreicht, was eine exzellente Spülwirkung ermöglicht. Eine Reinigung/Sterilisation ist erfindungsgemäß somit im Durchflussprinzip im Wesentlichen in Axialrichtung X-X und auch durch die beiden Lager 5, 6 möglich.

Weiter ist ein Gesamtquerschnitt des Austrittsspalts 23 kleiner als ein Gesamtquerschnitt des ersten Spalts 24. Weiterhin ist auch ein Gesamtquerschnitt des zweiten Spalts 25 kleiner als ein Gesamtquerschnitt des spaltförmigen ersten Bereichs 21, wobei diese beiden Gesamtquerschnitte wiederum größer als der Gesamtquerschnitt des ersten Spalts 24 sind. Durch diese Maßnahmen wird erreicht, dass die höchste Drosselwirkung am Austrittsspalt 23 vorgesehen ist, so dass eine Verweildauer des Reinigungsfluids im Fluidpfad 20 nicht zu kurz ist.

Da der erste Spalt 24 radial zur Axialrichtung X-X der Magnetkupplung 1 angeordnet ist, was auch im Wesentlichen radial zur Hauptdurchströmungsrichtung im Fluidpfad 20 ist, wird verhindert, dass zuviel Reinigungsfluid direkt durch den ersten Spalt 24 zur Außenseite austritt.

Wie weiter aus Fig. 1 ersichtlich ist, ist die in einem Rührwerk verwendete erfindungsgemäße Magnetkupplung 1 im Inneren des Rührbehälters 10 angeordnet. Lediglich die freien Enden des Flansches 43 sind zur Befestigung an der Außenseite des Rührbehälters aus dem Rührbehälter herausgeführt. Durch diese Maßnahme kann die Magnetkupplung 1, und insbesondere die Lagerung des Außenrotors 2, im Inneren des Rührbehälters 10 angeordnet werden, so dass eine Aufbauhöhe in Axialrichtung X-X im Vergleich mit dem Stand der Technik deutlich reduziert ist. Hierdurch kann ein erweitertes Einsatzspektrum des Rührwerks ermöglicht werden und insbesondere eine Verfahrbarkeit des Rührwerks deutlich erleichtert werden. Weiterhin ist durch Verwendung der erfindungsgemäßen Magnetkupplung mit einem Fluidpfad 20 zur Reinigung und/oder Sterilisierung insbesondere eine Verwendung bei sterilen Anwendungen möglich. Hierbei ist es bei sterilen Anwendungen nicht mehr notwendig, dass die Magnetkupplung zur Sterilisation komplett auseinandergebaut wird, sondern es kann eine Sterilisation im montierten Zustand gemeinsam mit einer Sterilisation des Rührbehälters und gegebenenfalls weiterer Teile erfolgen.

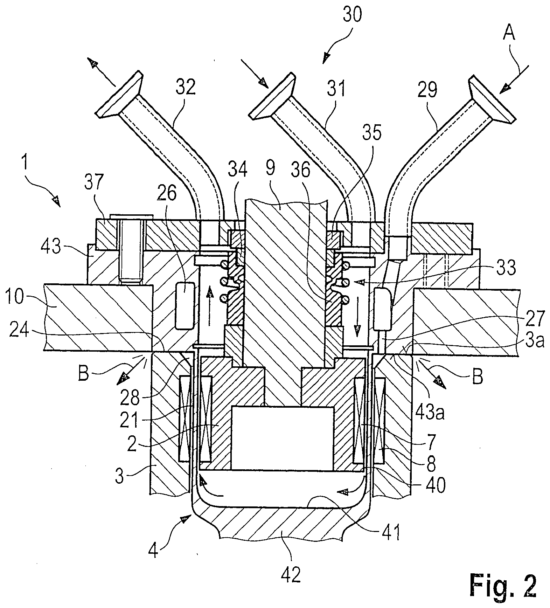

Fig. 2 zeigt eine Magnetkupplung 1 gemäß einem zweiten Ausführungsbeispiel der Erfindung, wobei gleiche bzw. funktional gleiche Teile wie im ersten Ausführungsbeispiel bezeichnet sind. Die Magnetkupplung 1 des zweiten Ausführungsbeispiels entspricht im Wesentlichen dem ersten Ausführungsbeispiel, wobei zusätzlich beim zweiten Ausführungsbeispiel noch eine Kühlungsvorrichtung 30 vorgesehen ist. Die Kühlungsvorrichtung 30 dient zur Kühlung der Magnetkupplung, wobei ein Kühlungspfad durch den Innenraum des Spalttopfes 4 geführt ist.

Wie aus Fig. 2 ersichtlich ist, umfasst die Kühlungsvorrichtung 30 eine Zuleitung 31 und eine Ableitung 32, welche im Wesentlichen tangential in den Innenraum des Spalttopfes 4 geführt sind bzw. von diesem fortgehen. Die Zuleitung 31 und die Ableitung 32 sind dabei am inneren Umfang des Spalttopfes 4 um 180° zueinander einander gegenüberliegend angeordnet. Die Kühlungsvorrichtung 30 umfasst ferner eine Hilfsdichtung 33, welche in diesem Ausführungsbeispiel eine Gleitringdichtung ist. Die Hilfsdichtung 33 umfasst einen rotierenden Gleitring 34, einen stationären Gleitring 35 sowie eine Vorspanneinrichtung 36.

Die gesamte Kühlvorrichtung 30 ist dabei an einer Platte 37 montiert und ist als vormontierbare Baugruppe vorgesehen, welche einfach in den Flansch 43 des Spalttopfs eingesetzt werden kann. Die Kühlvorrichtung 30 wird insbesondere bei schnelllaufenden Magnetkupplungen eingesetzt, um die aufgrund der Wirbelstromverluste in der Magnetkupplung entstehende Wärme abzutransportieren oder bei Verwendung der Magnetkupplung in Verbindung mit heißen Medien.

Ansonsten entspricht dieses Ausführungsbeispiel dem vorhergehenden Ausführungsbeispiel, so dass auf die dort gegebene Beschreibung verwiesen werden kann.

### Bezuqszeichenliste

- 1: Magnetkupplung
- 2: Innenrotor
- 3: Außenrotor
- 4: Spalttopf
- 5, 6: Lager
- 7, 8: Permanentmagnete
- 9: Antriebswelle
- 10: Rührbehälter
- 11: Anschluss
- 12: Hülse
- 13: Zylinder
- 14: Haltering
- 15: Schraubbolzen
- 20: Fluidpfad
- 21: spaltförmiger erster Bereich
- 21a: erweiternder Bereich
- 22: zweiter Bereich
- 23: Austrittsspalt
- 24: erster Spalt
- 25: zweiter Spalt
- 26: Ringkanal
- 27: Düsen
- 28: Fangraum
- 30: Kühlungsvorrichtung
- 31: Zuleitung
- 32: Ableitung
- 33: Hilfsdichtung
- 34: rotierender Gleitring
- 35: stationärer Gleitring
- 36: Vorspanneinrichtung
- 37: Platte
- 40: Mantelbereich
- 41: Boden
- 42: Lagerbereich
- 43: Flansch
- A: Zuführung Reinigungsmedium
- B, C: Austritt Reinigungsmedium
- V: Vertikalrichtung
- X-X: Axialrichtung

## Patentansprüche

1. Magnetkupplung für einen Obenantrieb eines Rührwerks umfassend:
- einen Innenrotor (2),
- einen Außenrotor (3), und
- einen Spalttopf (4), wobei der Spalttopf (4) einen Lagerbereich (42) aufweist, an welchem der Außenrotor (3) gelagert ist, und wobei der Lagerbereich (42) an einem Boden (41) des Spalttopfes (4) angeordnet ist,
- einen Fluidpfad (20) zur Reinigung und/oder Sterilisation mit einem Eintritt und einem Austritt, welche in Axialrichtung (X-X) der Magnetkupplung beabstandet sind,
**dadurch gekennzeichnet, dass**
- der Fluidpfad (20) wenigstens eine Düse (27) umfasst, welche im Fluidpfad (20) in Durchströmungsrichtung durch den Fluidpfad vor dem Spalttopf (4) angeordnet ist.

2. Magnetkupplung nach Anspruch 1, **dadurch gekennzeichnet, dass** der Austritt ringförmig ist.

3. Magnetkupplung nach einem der vorhergehenden Ansprüche, **dadurch gekennzeichnet, dass**
- der Lagerbereich (42) einstückig mit dem Spalttopf (4) ist, und/oder dass
- der Lagerbereich (42) einen maximalen Durchmesser aufweist, welcher kleiner ist als ein maximaler Durchmesser eines Mantelbereichs (40) des Spalttopfs, und/oder dass
- dass der Lagerbereich (42) in Vertikalrichtung (V) gerichtet ist.

4. Magnetkupplung nach einem der vorhergehenden Ansprüche, ferner umfassend ein erstes Lager (5) und ein zweites Lager (6), welche am Lagerbereich (42) des Spalttopfes angeordnet sind, um den Außenrotor (3) zu lagern.

5. Magnetkupplung nach Anspruch 4, **dadurch gekennzeichnet, dass** das erste Lager (5) und das zweite Lager (6) Teil einer Lageranordnung sind und die Lageranordnung ferner eine Hülse (12) und einen die Hülse (12) umgebenden Zylinder (13) umfasst, wobei die Hülse (12) am Lagerbereich (42) angeordnet ist.

6. Magnetkupplung nach einem der vorhergehenden Ansprüche, **dadurch gekennzeichnet, dass** der Fluidpfad (20) einen ersten Bereich (21) zwischen einem Außenumfang des Mantelbereichs (40) des Spalttopfs und dem Außenrotor (3) sowie einen zweiten Bereich (22) zwischen dem Lagerbereich (42) und dem Außenrotor (3) aufweist, wobei der Fluidpfad (20) an einem austrittsseitigen Ende einen Austrittsspalt (23) aufweist, welcher zwischen dem Lagerbereich (42) und dem Außenrotor (3) gebildet ist.

7. Magnetkupplung nach einem der vorhergehenden Ansprüche, **dadurch gekennzeichnet, dass** das erste Lager (5) und/oder das zweite Lager (6) derart im Fluidpfad (20) angeordnet sind, dass eine Durchströmung des ersten und/oder zweiten Lagers möglich ist.

8. Magnetkupplung nach einem der vorhergehenden Ansprüche, **dadurch gekennzeichnet, dass** der Spalttopf (4) einen Flansch (43) aufweist und der Fluidpfad (20) durch den Flansch (43) verläuft, wobei zwischen dem Flansch (43) und dem Außenrotor (3) ein erster Spalt (24) vorgesehen ist, wobei der erste Spalt (24) derart eingerichtet ist, dass Fluid aus dem Fluidpfad (20) zu einer Außenseite der Magnetkupplung austreten kann.

9. Magnetkupplung nach einem der vorhergehenden Ansprüche, **dadurch gekennzeichnet, dass** der Fluidpfad (20) einen Ringkanal (26) und einen Düsenkranz mit einer Vielzahl von Düsen (27) aufweist, wobei die Düsen (27) insbesondere in den ersten Bereich (21) des Fluidpfads münden.

10. Magnetkupplung nach einem der vorhergehenden Ansprüche, **dadurch gekennzeichnet, dass** der Fluidpfad (20) zwischen dem ersten Lager (5) und dem zweiten Lager (6) einen zweiten Spalt (25) aufweist.

11. Magnetkupplung nach einem der Ansprüche 8 bis 10, **dadurch gekennzeichnet, dass** ein Querschnitt des Austrittsspalts (23) kleiner als ein Querschnitt des ersten Spalts (24) ist.

12. Magnetkupplung nach einem der vorhergehenden Ansprüche, ferner umfassend eine Kühlungsvorrichtung (30), welche eine Zuleitung (31) und eine Ableitung (32) aufweist, um ein Kühlfluid in einen Innenraum des Spalttopfes (4) zuzuführen und abzuführen.

13. Magnetkupplung nach Anspruch 12, **dadurch gekennzeichnet, dass** die Zuleitung (31) und die Ableitung (32) am inneren Umfang des Spalttopfes (4) um 180° einander gegenüberliegend angeordnet sind.

14. Rührwerk mit Obenantrieb, umfassend eine Magnetkupplung nach einem der vorhergehenden Ansprüche, wobei die Magnetkupplung in Vertikalrichtung (V) angeordnet ist.

15. Rührwerk nach Anspruch 14, **dadurch gekennzeichnet, dass** die Magnetkupplung (1) im Inneren eines Rührbehälters (10) angeordnet ist.

## Claims

1. A magnetic coupling for a top drive of a stirring assembly, comprising:
- an inner rotor (2),
- an outer rotor (3), and
- a split case (4), the split case (4) having a bearing portion (42) at which the outer rotor (3) is supported and the bearing portion (42) being arranged at a bottom (41) of the split case (4),
- a fluid path (20) for cleaning and/or sterilization having an inlet and an outlet being spaced from the magnetic coupling in an axial direction (X-X),
**characterized in that**
- the fluid path (20) comprises at least one nozzle (27) which is arranged within the fluid path (20) in a flow direction through the fluid path upstream of the split case (4).

2. The magnetic coupling according to claim 1, **characterized in that** the outlet is ring-shaped.

3. The magnetic coupling according to any one of the preceding claims, **characterized in that**
- the bearing portion (42) is integral with the split case (4), and/or
- the bearing portion (42) has a maximum diameter which is smaller than a maximum diameter of a sheath portion (40) of the split case, and/or
- the bearing portion (42) is oriented in a vertical direction (V).

4. The magnetic coupling according to any one of the preceding claims, further comprising a first bearing (5) and a second bearing (6) being arranged at the bearing portion (42) of the split case in order to support the outer rotor (3).

5. The magnetic coupling according to claim 4, **characterized in that** the first bearing (5) and the second bearing (6) are part of a bearing assembly and that the bearing assembly further comprises a sleeve (12) and a cylinder (13) surrounding the sleeve (12), wherein the sleeve (12) is arranged at the bearing portion (42).

6. The magnetic coupling according to any one of the preceding claims, **characterized in that** the fluid path (20) includes a first portion (21) between an outer periphery of the sheath portion (40) of the split case and the outer rotor (3) as well as a second portion (22) between the bearing portion (42) and the outer rotor (3), wherein the fluid path (20) includes an outlet gap (23) at the outlet-side end, said outlet gap being formed between the bearing portion (42) and the outer rotor (3).

7. The magnetic coupling according to any one of the preceding claims, **characterized in that** the first bearing (5) and/or the second bearing (6) is/are arranged within the fluid path (20) such that a flow through the first and/or the second bearing is possible.

8. The magnetic coupling according to any one of the preceding claims, **characterized in that** the split case (4) includes a flange (43) and the fluid path (20) extends through the flange (43), wherein a first gap (24) is provided between the flange (43) and the outer rotor (3), wherein the first gap (24) is oriented such that fluid can exit from the fluid path (20) toward an outside of the magnetic coupling.

9. The magnetic coupling according to any one of the preceding claims, **characterized in that** the fluid path (20) includes a ring channel (26) and a nozzle ring having a plurality of nozzles (27), wherein the nozzles (27) in particular open into the first portion (21) of the fluid path.

10. The magnetic coupling according to any one of the preceding claims, **characterized in that** the fluid path (20) includes a second gap (25) between the first bearing (5) and the second bearing (6).

11. The magnetic coupling according to any one of claims 8 to 10, **characterized in that** a cross-section of the outlet gap (23) is smaller than a cross-section of the first gap (24).

12. The magnetic coupling according to any one of the preceding claims, further comprising a cooling device (30) including a supply line (31) and a discharge line (32) in order to supply and discharge a cooling fluid into and from an interior of the split case (4).

13. The magnetic coupling according to claim 12, **characterized in that** the supply line (31) and the discharge line (32) are arranged at the inner periphery of the split case (4) opposing each other by 180°.

14. A stirring assembly with a top drive, comprising a magnetic coupling according to any one of the preceding claims, wherein the magnetic coupling is arranged in a vertical direction (V).

15. The stirring assembly according to claim 14, **characterized in that** the magnetic coupling (1) is arranged in the interior of a stirring container (10).

## Revendications

1. Embrayage magnétique pour un entraînement supérieur d'un agitateur comprenant :
- un rotor intérieur (2),
- un rotor extérieur (3) et
- un pot d'entrefer (4), dans lequel le pot d'entrefer (4) présente une zone de palier (42), au niveau de laquelle le rotor extérieur (3) est logé, et dans lequel la zone de palier (42) est agencée au niveau d'un fond (41) du pot d'entrefer (4),
- une voie de fluide (20) pour le nettoyage et/ou la stérilisation avec une entrée et une sortie qui sont espacées dans le sens axial (X-X) de l'embrayage magnétique,
**caractérisé en ce que**
- la voie de fluide (20) comprend au moins une buse (27) qui est agencée dans la voie de fluide (20) dans le sens d'écoulement par la voie de fluide avant le pot d'entrefer (4).

2. Embrayage magnétique selon la revendication 1, **caractérisé en ce que** la sortie est annulaire.

3. Embrayage magnétique selon l'une quelconque des revendications précédentes, **caractérisé en ce que**
- la zone de palier (42) est d'un seul tenant avec le pot d'entrefer (4), et/ou que
- la zone de palier (42) présente un diamètre maximal qui est inférieur à un diamètre maximal d'une zone d'enveloppe (40) du pot d'entrefer, et/ou que
- la zone de palier (42) est dirigée dans le sens vertical (V).

4. Embrayage magnétique selon l'une quelconque des revendications précédentes, comprenant en outre un premier palier (5) et un second palier (6) qui sont agencés au niveau de la zone de palier (42) du pot d'entrefer afin de loger le rotor extérieur (3).

5. Embrayage magnétique selon la revendication 4, **caractérisé en ce que** le premier palier (5) et le second palier (6) font partie d'un agencement de palier et l'agencement de palier comprend en outre une douille (12) et un cylindre (13) entourant la douille (12), dans lequel la douille (12) est agencée au niveau de la zone de palier (42).

6. Embrayage magnétique selon l'une quelconque des revendications précédentes, **caractérisé en ce que** la voie de fluide (20) présente une première zone (21) entre une périphérie extérieure de la zone enveloppe (40) du pot d'entrefer et le rotor extérieur (3) ainsi qu'une seconde zone (22) entre la zone de palier (42) et le rotor extérieur (3), dans lequel la voie de fluide (20) présente, à une extrémité côté sortie, une fente de sortie (23) qui est formée entre la zone de palier (42) et le rotor extérieur (3).

7. Embrayage magnétique selon l'une quelconque des revendications précédentes, **caractérisé en ce que** le premier palier (5) et/ou le second palier (6) sont agencés dans la voie de fluide (20) de telle manière qu'un écoulement du premier et/ou second palier soit possible.

8. Embrayage magnétique selon l'une quelconque des revendications précédentes, **caractérisé en ce que** le pot d'entrefer (4) présente une bride (43) et la voie de fluide (20) s'étend au travers de la bride (43), dans lequel un premier entrefer (24) est prévu entre la bride (43) et le rotor extérieur (3), dans lequel le premier entrefer (24) est aménagé de telle manière que le fluide puisse sortir de la voie de fluide (20) vers un côté extérieur de l'embrayage magnétique.

9. Embrayage magnétique selon l'une quelconque des revendications précédentes, **caractérisé en ce que** la voie de fluide (20) présente un canal annulaire (26) et une couronne de buses avec une pluralité de buses (27), dans lequel les buses (27) débouchent en particulier dans la première zone (21) de la voie de fluide.

10. Embrayage magnétique selon l'une quelconque des revendications précédentes, **caractérisé en ce que** la voie de fluide (20) présente un second entrefer (25) entre le premier palier (5) et le second palier (6).

11. Embrayage magnétique selon l'une quelconque des revendications 8 à 10, **caractérisé en ce qu'**une section transversale de l'entrefer de sortie (23) est inférieure à une section transversale du premier entrefer (24).

12. Embrayage magnétique selon l'une quelconque des revendications précédentes, comprenant en outre un dispositif de refroidissement (30) qui présente une conduite d'alimentation (31) et une conduite d'évacuation (32) afin d'amener et d'évacuer un fluide de refroidissement dans un espace intérieur du pot d'entrefer (4).

13. Embrayage magnétique selon la revendication 12, **caractérisé en ce que** la conduite d'alimentation (31) et la conduite d'évacuation (32) sont agencées au niveau de la périphérie intérieure du pot d'entrefer (4) à l'opposé l'une de l'autre de 180°.

14. Agitateur avec entraînement supérieur, comprenant un embrayage magnétique selon l'une quelconque des revendications précédentes, dans lequel l'embrayage magnétique est agencé dans le sens vertical (V).

15. Agitateur selon la revendication 14, **caractérisé en ce que** l'embrayage magnétique (1) est agencé dans l'intérieur d'un récipient d'agitation (10).
